# EUROPEAN PATENT APPLICATION

(11) **EP 4 310 993 A1**
(43) Date of publication of application: **24.01.2024**
(21) Application number: 22186293.1
(22) Date of filing: 21.07.2022
(51) Int. Cl.: H01M 10/647, H01M 10/6553, H01M 10/6554, H01M 10/6555

(54) **BATTERY APPARATUS WITH A CELL TAB COOLING SYSTEM**

(71) Applicant: Newfrey LLC, New Britain, CT 06053 (US)
(72) Inventor: AKBARINIA, Alireza, 35394 Gießen (DE)
(74) Representative: SBD IPAdmin

(57) **Abstract**

Battery apparatus (10) comprising a pouch cell (12) with a cell body (18), a first tab (20) and a second tab (22) adapted to provide electrical connections to the cell body (18), and a cell tab cooling system (16) configured to manage the temperature of the cell tabs, wherein the cell tab cooling system (16) is in facing contact with the first and/or the second tab (20, 22), and in that the cell tab cooling system (16) comprises a thermally conductive plate (24) made of high thermal conductivity material.

## Description

The field to which the disclosure generally relates includes methods and assemblies for thermal management of the temperature of battery components and thermal safety features. More particularly, the present invention relates to a battery apparatus for a thermal management of battery packs, modules or subassemblies.

In this application "thermal management" function and objective shall mean maintaining a battery and its individual subassemblies withing desired temperature limits (minimum and maximum) and within a desired variation (ΔT) band from one subassembly to another. "Thermal safety" function shall mean limiting heat propagation between battery subcomponents, in particular from cell to cell, with the objective of preventing a thermal runaway event.

In the present context, the terms "battery cell", "battery module", "battery section", and "battery pack" (as well as their shortened variants "cell", "module", "section", and "pack") are used to describe different levels of components of an overall battery assembly or battery apparatus. For example, numerous individual battery cells form the building blocks of battery modules. Multiple battery modules (in conjunction with ancillary equipment) in turn make up a battery pack.

More particularly, in the automotive industry, Lithium-ion battery cells are used to form automotive battery packs. The battery pack typically includes a large number of battery pouch cells, sometimes several hundreds, even thousands, to meet desired power and capacity needs. Each battery pouch cell can further contain a plurality of stacks (i.e. anodes, cathodes, and separators) and electrode leads (also called cell tabs in the present application). Several cells are usually joined together through cell tabs and busbars (i.e., interconnecting units) to form a module. A typical battery pack can then include tens of such modules. A battery system may include one or more battery packs suitably sized to provide electrical power to the vehicle.

One of the important issues in the construction of an electric vehicle is the thermal management and thermal safety systems of the battery. Thermal management is essential for the performance and operating life of electric vehicle batteries and several studies, disclosures, and patent documents deal with this issue.

It is for instance known to use cooling fins to conduct heat away from the battery cells or battery pouch cells. The cooling fins may be made of a material with a high thermal conductivity (alternatively, low thermal resistance) to transfer heat to a cooler or heat exchanger. The cooling fins extend between two body cells and are mostly in facing contact with the body of the cells. For instance, EP22176073.9 from the applicant discloses such fins extending between two battery cells.

It is also known to cool electric vehicle batteries by forced convection with a forced air or liquid coolant circulated through cooling passages. For instance, documents US2021135307A1, US2014308551A1 and US2008305388A1 disclose a liquid-cooled battery system. US2016204483A1 also discloses cooling fins configured to receive the flow of the liquid coolant through a coolant channel and discloses cell-to-cell thermal insulation within a battery system using passive cooling, such as conduction, radiation, or convective cooling without active circulation of a cooling fluid.

However, such cooling fins only cool the cell body and there is a need to further cool other portions of the battery and/or to provide an alternative to these cooling fins.

For this purpose, it is also known to cool the cell tabs. For instance, WO2022051642A1 discloses a battery pack cooling system with a pouch cell comprising a first and a second tab and a tap enclosure configured to contain a cooling material. The cooling material comprises a liquid submerging at least one of the first tab and the second tab. Such arrangement is complex to mount and to maintain with a risk of leak.

It is an object of the present invention to provide a battery apparatus easy to assemble, to maintain and which provides a reliable thermal safety.

Accordingly, the present invention is directed to a battery apparatus according to claim 1. More particularly, the battery apparatus comprises a pouch cell with a cell body and a first and a second tab adapted to provide electrical connections to the cell body, and a cell tab cooling system configured to manage the temperature of the cell tabs, wherein the cell tab cooling system is in facing contact with the first and/ or the second tab, and in that the cell tab cooling system comprises a thermally conductive plate made of high thermal conductivity material.

Thermal conductivity is a material property and describes the ability of the given material to conduct heat. A material with high thermal conductivity is a better thermal conductor. This property is independent of material size, shape, or orientation in a homogeneous material, and because of this, thermal conductivity is an idealized value. Thermal conductivity is measured in units of Watts / meter-Kelvin. For instance, a high thermal conductivity material is a material having a thermal conductivity in the range of 100 to 3000 W·m-1·K-1.

In an embodiment, the thermally conductive plate is made of graphite or copper. Graphite or copper are materials having a high thermal conductivity.

In an embodiment, the cell tab cooling system comprises an outer layer made of electrically insulated material, and wherein the outer layer surrounds the thermally conductive plate. The outer layer is for instance a flexible plastic coating.

In an embodiment, a glue is arranged between the cell tabs and the thermally conductive plate. In an embodiment, a glue is arranged between the outer layer and the thermally conductive plate. The glue may also have thermal and/or electrical insulating properties.

In an embodiment, the outer layer has a thickness between 10 and 100 micrometres. The known battery tabs have a thickness between 0.010 and 0.150 mm. Therefore, the cooling tab system should not increase the total thickness of the tabs and should not increase the weight of the battery apparatus.

In an embodiment, the thermally conductive plate has a thickness between 10 micrometres and 1 mm.

In an embodiment, the first and/or the second tab extend along a tab length, and wherein the length of the thermally conductive plate is the same or is shorter than the length of the first and/or second tab.

In an embodiment, the pouch cell is a first pouch cell and further comprising a second pouch cell and a cooling fin extending between the first and the second pouch cell and in facing contact with the first and the second pouch cell.

In an embodiment, the cell tab cooling system is integral with the cooling fin.

In an embodiment, the cell tab cooling system contacts the cooling fin.

In an embodiment, the cooling fin is a thermal fin with a first contact unit, a second contact unit and a supporting unit sandwiched between the first and the second contact unit, the supporting unit comprising a structure arranged to establish an insulating gap.

In an embodiment, the first and/or the second tab extend along a tab length, and wherein the length of the cell tab cooling system and/or the conductive plate is longer than the length of the first and/or second tab.

In an embodiment, the cell tab cooling system extends from the cell body to a casing, and wherein the first and/or the second tab are at a non-zero distance from the casing.

In an embodiment, the casing comprises a cooling plate and the cell tab cooling system is directly or indirectly connected to the cooling plate. More particularly, the cell tab cooling system can directly contact the cooling plate such that the thermally conductive plate touches the cooling plate, or be indirectly connected to the cooling plate, such that a part extends between the thermally conductive and the cooling plate, the plate being adapted to transfer the heat.

A specific embodiment of the present invention will now be described, by way of example only and with reference to the accompanying drawings, of which:
Fig.1 is a perspective view of an exemplary battery apparatus according to the invention with two battery pouch cells, each having two cell tabs, a cooling fin extends between the two pouch cells, and a cell tab cooling system according to a first embodiment in a first arrangement;
Fig. 2A shows a schematic cross-section view of the battery apparatus of Fig. 1;
Fig. 2B shows a schematic cross-section view of a battery apparatus according to the invention with two cell pouches with cell tabs arranged the same side of a cell pouch body and a cell tab cooling system according to the first embodiment in a second arrangement;
Fig. 3A shows a schematic cross-section view of a battery apparatus according to the invention with a cell pouch with cell tabs and a cell tab cooling system according to a second embodiment;
Fig. 3B show a schematic cross-section view of a battery apparatus according to the invention with two cell pouches with cell tabs and a cell tab cooling system according to a third embodiment;
Fig. 4 shows a schematic cross-section view of a battery apparatus according to the invention with two cell pouches with cell tabs arranged on both sides of a cell pouch body and a cell tab cooling system according to a fourth embodiment;
Fig. 5A shows in more detail a schematic view of a conductive plate and its outer layer of the cell tab cooling system according to the embodiments of Fig.1, Fig. 2A and Fig. 2B;
Fig. 5B shows in more detail a schematic view of a conductive plate and its outer layer of the cell tab cooling system adapted to be used in the embodiments of Fig. 3A, Fig. 3B and Fig. 4.

On the different figures, the same reference signs designate identical or similar elements.

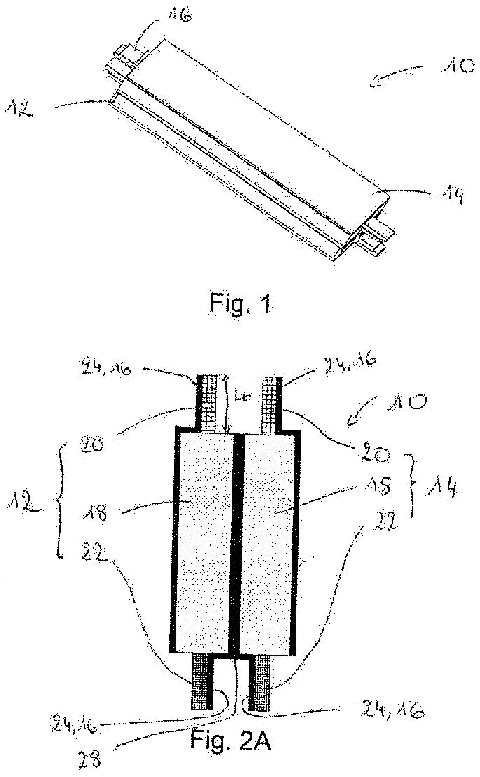

Fig. 1 shows a battery apparatus 10 comprising a first pouch cell 12, a second pouch cell 14 and a cell tab cooling system 16. The first and second pouch cells 12, 14 are identical or similar. A pouch cell 12, 14 comprises a cell body 18, a first tab 20 and a second tab 22. The first tab 20 is for instance an anode tab and the second tab 22 is a cathode tab. The first and second tabs 20, 22 are connected to internal component of the cell body 18 and exit the cell body 18 to allow the cell's energy to be transferred to an external source. For a given pouch cell 12, 14, one tab may correspond to a positive terminal of the pouch cell and another tab may correspond to a negative terminal of the pouch cell. In the exemplary embodiment depicted in Fig. 1, the battery apparatus 10 has two pouch cells, however, the battery apparatus 10 could also have only one pouch cell without departing from the scope of the present disclosure. In another embodiment, the battery apparatus could have a plurality of pouch cells without departing from the scope of the present disclosure. Besides, the pouch cells may be similar, identical or not.

Each pouch cell 12, 14 may comprise any battery or cell structure that has tabs connected to the cell body and the internal components of the pouch cell. The pouch cell may have any suitable battery chemistry. For example, the pouch cell may be a lithium-ion cell, such as lithium cobalt oxide, lithium manganese oxide, lithium nickel manganese cobalt oxide, lithium iron phosphate, lithium nickel cobalt aluminium oxide, lithium titanate, other lithium-based battery chemistries, or other battery chemistries.

The cell tabs 20, 22 are each thin, flat and long sheet electrode. In a known manner, the cell tabs are mostly made of copper or nickel-plated cooper for the anode (positive electrode) and of aluminium for the cathode (negative electrode).

The battery apparatus 10 comprises the cell tab cooling system 16 which is configured to manage the temperature of the cell tabs 20, 22. The cell tab cooling system 16 is in facing contact with the first and/or second tab 20, 22. For instance, the cell tab cooling system 16 comprises a thermally conductive plate 24 made of high thermal conductivity material.

For instance, a high thermal conductivity material is a material having a thermal conductivity in the range of 100 to 3000 W·m-1·K-1. The thermally conductive plate 24 is made of graphite or copper. The thermally conductive plate is adapted to thermally conduct the heat from the cell tab to an external environment.

The cell tab cooling system 16 and more particularly the thermally conductive plate 24 is adapted to the shape of the cell tabs 20, 22. The cell tabs 20, 22, as previously mentioned are thin, flat and long sheet electrodes, and may for instance have a rectangular shape. The thermally conductive plate 24 has sensibly the same shape and extends along the cell tabs 20, 22.

For each cell tab 20, 22, a thermally conductive plate 24 extends along the cell tab 20, 22. The thermally conductive plate 24 is for instance covered by an outer layer 26. The outer layer 26 is for instance a thin layer of an electrical isolator material. A glue may be provided between the outer layer and the thermally conductive plate . A glue may also be arranged between the cell tabs 20, 22 and the conductive plate 24 (the outer layer thus does not contact the cell tabs 20, 22). The outer layer 26 may entirely or only partially cover the thermally conductive plate 24. For example, the outer layer may only be provided on the face of the thermally conductive plate 24 opposite the face facing the cell tab 20, 22.

Fig. 2A shows the battery apparatus of Fig. 1 in cross-section. As visible, each pouch cell 12, 14 comprises the cell body 18 and two cell tabs 20, 22. The cell body is sensibly rectangular with a long side and a short side and a first cell tab 20 extends from the battery body from one side, whereas the second cell tab 22 extends from the cell body from the opposite side. The pouch cells are arranged closed to each other. More particularly, for parallelepipedal cell body, the wider faces of the pouch cells can extend parallel or sensibly parallel to each other. In a known manner, a cooling fin 28 extends between two pouch cell 20, 22 in order to dissipate heat from the wide faces of a cell. Foreach of the four cell tabs (two cell tabs per pouch cells), a thermally conductive plate 24 is provided along the cell tab. Thus, the cell tab cooling system 16 of the embodiment of Fig. 1 and Fig. 2A comprises four (4) thermally conductive plates 24.

As previously described, each thermally conductive plate 24 can have an outer layer 26 made of an electrical isolator material.

In the embodiment of Fig. 1 and Fig. 2A the cell tab cooling system 16 also ensure the function of cooling fin. More particularly, each thermally conductive plate 24 is integral with one cooling fin. For instance, the thermally conductive plate extends along the cell tab and along the cell body. More particularly, for each cell tab 20, 22 is associated a thermally conductive plate 24 which also forms a cooling fin. Thus, the first cell tab 20 of the first pouch cell 12 is in facing contact with a first thermally conductive plate 24 (eventually coated with an electrically isolator layer, as mentioned above). The first thermally conductive plate 24 comprises a first portion 241 (for instance a first flat portion) extending along the first cell tab 20 and a second portion 242 (for instance a second flat portion) extending along a wide face of the cell body of the first cell pouch. The first and second portions 241, 242 are connected, eventually through a third portion 243. The third portion 243 may extend sensibly orthogonal to the first and second portions 241, 242. In a similar way, a second thermally conductive plate 24 (eventually coated with an electrically isolator layer, as mentioned above) comprises the first portion 241 (for instance a first flat portion) extending along the second cell tab 22 of the first pouch cell 12 and the second portion 242 (for instance a second flat portion) extending along a wide face of the cell body of the first pouch cell 12. The second portions 242 of the first and second thermally conductive plates 24 do not extend on the same side of the cell body 18, such that both wide faces of the cell body 18 are in contact with a thermally conductive plate 24.

The first portion of the thermally conductive plate 24 has a first length Lp1. The first length Lp1 may be the same than the length Lt of the cell tab 20, 22 or may be shorter or may be longer, as better described below. The second portion of the thermally conductive plate 24 has a second length Lp2.

In an identical manner, for the second pouch cell 14, a third thermally conductive plate 24 comprises the first portion 241 (for instance a first flat portion) extending along the first cell tab 20 and a second portion 242 (for instance a second flat portion) extending along a wide face of the cell body 18 of the second pouch cell 14. A fourth thermally conductive plate 24 (eventually coated with an electrically isolator layer, as mentioned above) comprises the first portion 241 (for instance a first flat portion) extending along the second cell tab 22 of the second pouch cell 14 and the second portion 242 (for instance a second flat portion) extending along a wide face of the cell body of the second pouch cell 14.

The second portions 242 of the second and fourth thermally conductive plates 24 may for example extend between the first and second pouch cell 12, 14 such that they are facing each other on one side and facing the first or the second pouch cell on the other side.

The embodiment of Fig.2A depicts two pouch cells. However, in other embodiments, a plurality of pouch cells may be stacked side by side to form a module or a pack or a battery subassembly (or only one pouch cell can be provided). In another embodiment, the battery apparatus 10 may comprise only one pouch cell and one thermally conductive plate.

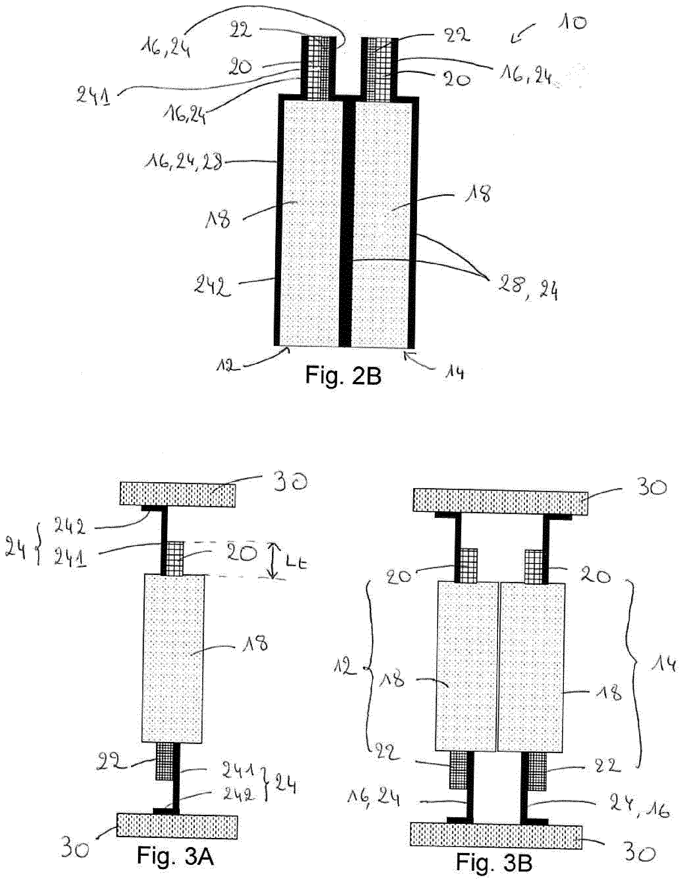

Fig. 2B shows a battery apparatus 10 similar to the battery apparatus of Fig. 2A, except that the cell tabs are not arranged on two opposite sides of the cell body, as illustrated in Fig. 2A, but the cell tabs of Fig. 2B are arranged on the same side of the cell body. The cell tabs 20, 22 of Fig. 2B does not contact each other. A gap is provided between the first cell tab 20 and the second cell tab 22. As depicted in Fig. 2B, the thermally conductive plate extends along the cell tab and along the cell body. More particularly, for each cell tab 20, 22 is associated a thermally conductive plate 24 which also forms a cooling fin.

Fig. 3A shows a battery apparatus 10 comprising one pouch cell 12 with a first and a second cell tab 20, 22 and a cell tab cooling system 16. The cell tab cooling system 16 comprises a first thermally conductive plate 24 with a first portion extending along the first cell tab 20. The first length Lp1 of the thermally conductive plate is for instance greater than the length Lt of the first cell tab 20. The cell tab cooling system 16 also comprises a second thermally conductive plate 24 with a first portion 241 extending along the second cell tab. In an embodiment, only one of the two tabs could be provided with a thermally conductive plate. The first length Lp1 of the second thermally conductive plate is for instance greater than the length Lt of the second cell tab. The cell tab cooling system 16 further comprises a cooling plate or cooler 30. The cooler 30 can be sensibly flat and can comprise several layers (not represented). The first layer is for instance a thermal pad, the second layer can be a first cold plate, the third layer can be a fluid channel transporting a coolant and the last layer can be a second cold plate. The first thermally conductive plate may have a second portion in facing contact with the cooling plate. Thus, the thermally conductive plate 24 is adapted to transport the heat from the first cell tab 12 it contacts to the cooler 30. The cooler 30 may also be formed by a housing of a battery sub-assembly (battery module, battery pack or battery cell).

In Fig. 3B, the battery apparatus comprises two pouch cells 12, 14 adjacent to each other. Each pouch cell 12, 14 comprises two cell tabs 20, 22. As depicted in Fig. 3B, the cell tabs are arranged each on a side of the cell body. However, as depicted in Fig. 2B, the cell tabs could be arranged on the same side of the cell body. The cell tab cooling system 16 comprises a first, a second, a third and a fourth thermally conductive plate 24. The first thermally conductive plate 24 extends from the first cell body 18 along a first cell tab 20 and beyond the first cell tab until it reaches a cooler 30. A gap is arranged between a free end of the cell tab 20 and the cooler 30. In an identical manner, the second thermally conductive plate 24 extends from the first cell body 18 along a second cell tab 22 and beyond the second cell tab 22 until it reaches a cooler 30. The third thermally conductive plate 24 extends from the second cell body along a third cell tab and beyond the third cell tab until it reaches a cooler 30. The fourth thermally conductive plate 24 extends from the second cell body 18 along a fourth cell tab 22 and beyond the fourth cell tab until it reaches a cooler 30. The battery apparatus may have several coolers 30, such that for each thermally conductive plate a cooler is assigned or may have only one cooler 30. For instance, two coolers 30 are depicted in Fig. 3B. The first cooler 30 is in contact with the first and the third thermally conductive plate 24. The second cooler is in contact with the second and the fourth thermally conductive plate 24. The first and second cooler may be arranged such that the pouch cells 12, 14 extend between the first and second cooler 30, without contacting it.

Each thermally conductive plate has a L-shape with a first portion 241 extending along a cell tab 20, 22 (and beyond said cell tab) and a second portion 242 is facing contact with the cooler 30. For instance, first and second portions 241, 242 may be orthogonal to each other.

In Fig. 3B, a cooling fin (not represented) or an air gap may be provided between the first and second cell bodies 18. The cooling fin may also be formed by one or several of the thermally conductive plate, such as described in reference to Fig. 2A and Fig. 2B.

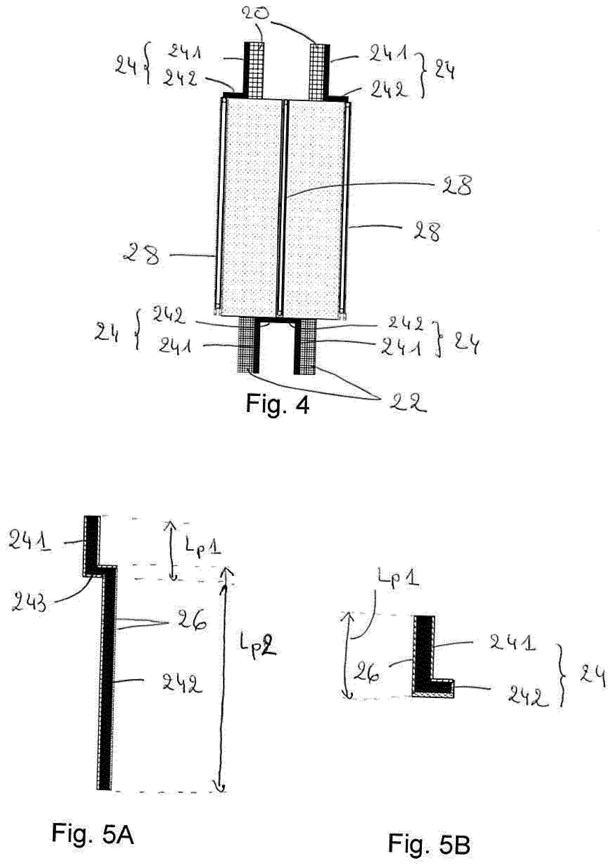

Fig. 4 shows a further embodiment of the present invention. In this embodiment, the cell tab cooling system 16 is not integral with a cooling fin but is connected to a cooling fin. More particularly, the cell tab cooling system 16 and the thermally conductive plate 24 touches or contacts the cooling fin 28. A cooling fin or a thermal fin as disclosed in EP22176073.9 from the applicant may be arranged between two pouch cells 12, 14. For instance, the thermal/cooling fin 28 can comprise a supporting unit sandwiched between a first and a second contact unit, the supporting unit being adapted to establish an insulating gap (for example an air gap) between the first and second contact unit, wherein the first and second contact unit are in facing contact with a cell body. The cooling fin 28 of Fig. 4 may have another structure. The thermal/cooling fin 28 enables the cell body 18 cooling, wherein the cell tab cooling system 16 provides cooling to the cell tabs 20, 22. The cell tabs cooling system 16 comprises the thermally conductive plate 24. For example, the thermally conductive plate 24 is L-shaped. A first portion 241 extends along the cell tab 20, 22, wherein a second portion 242 extends along a side of the pouch cell 12, 14 until it contacts the cooling/thermal fin. The embodiment illustrated in Fig. 4 shows a battery apparatus 10 with two pouch cells 12, 14. Between the pouch cells extend a thermal or a cooling fin 28, the thermal or cooling fin being in facing contact with the cell bodies 18. Two other cooling/thermal fin 28 are also arranged around the pouch cells 12, such that the wide faces of the pouch cells are in facing contact with one thermal/cooling fin 28. The thermally conductive plate 24 of the first cell tabs 20 may for instance contact the thermal/cooling fin arranged on the outer side of the pouch cells. More particularly, the second portions 242 contact the thermal/cooling fin arranged on the outer side of the pouch cells. The thermally conductive plate 24 of the second cell tabs 22 may for instance contact the thermal/cooling fin arranged on the between the pouch cells. More particularly, the second portions 242 contact the thermal/cooling fin arranged between the pouch cells.

Thus, a thermally conductive plate is associated to each thermal/cooling fin 28.

Fig. 5A and Fig. 5B show in greater detail the thermally conductive plate with the outer layer or electrical isolator layer.

Fig. 5A shows an embodiment of the thermally conductive plate 24 as notably represented in Fig. 1, Fig. 2A and Fig. 2B.

As mentioned above, the thermally conductive plate 24 comprises a first portion 241 having a first length Lp1 and adapted to extend along the cell tab 20, 22. The thermally conductive plate 24 also comprises a second section 242 having a second length Lp2 and adapted to extend along a wide face of a cell body. For instance the second length Lp2 is greater than the first length Lp1. First and second portions 241, 242 might be connected together through a third portion 243, which can longitudinally extend perpendicular to the first and second section 241, 242. The first length Lp1 of the first portion 241 sensibly corresponds to the length Lt of the cell tab, wherein the second length Lp2 of the second portion 242 sensibly corresponds to the length of the cell body. The thermally conductive plate 24 is for instance in graphite or cupper, and can be provided with the outer layer 26 which is an electrical isolator layer surrounding the graphite or copper material. A glue may be arranged between the outer layer 26 and the thermally conductive plate 24.

Fig. 5B shows the embodiment of the thermally conductive plate 24 as notably represented with regard to the battery apparatus 10 depicted in Fig. 3A, Fig. 3B or Fig. 4. The thermally conductive plate 24 comprises the first portion 241 adapted to extend along a cell tab 20, 22 and a second portion 242 adapted to extend either along a cooler (as shown in Fig. 3A or Fig. 3B) or along a thin face of a body cell in order for example to then contact a cooling fin or a thermal fin (as shown in Fig. 4). The thermally conductive plate 24 is for instance in graphite or cupper, and can be provided with the outer layer 26 which is an electrical isolator layer surrounding the graphite or copper material. A glue may be arranged between the outer layer 26 and the thermally conductive plate 24.

For instance, in the embodiments of Fig. 5A and Fig. 5B, the thermally conductive plate 24 may have a thickness t between 10 micrometres and 1 mm. The thermally conductive plate may be flexible. Thus its shape can be adapted to the shape of the cell tabs and/or the pouch cell. The electrical isolator layer (also called outer layer 26) may have a thickness between 10 micrometres and 100 micrometres.

The cell tab cooling system 16 thus is easy to manufacture and transfers the heat from the cell tabs to the top or bottom of a battery sub-assembly or to the thermal fin between the pouch cells and cool the cell tabs.

Although specific examples have been illustrated and described herein, a variety of alternate and/or equivalent implementations may be substituted for the specific examples shown and described without departing from the scope of the present disclosure. This application is intended to cover any adaptations or variations of the specific examples discussed herein. For example, the battery apparatus of Fig. 1 or Fig. 2A or Fig. 2B or Fig. 4 may also be provided with a cooler. In the disclosed embodiments, all cell tabs are arranged with a thermally conductive plate. However, in some embodiments, only some cell tabs may be provided with a thermally conductive plate without departing from the scope of the present disclosure.

## Claims

1. Battery apparatus (10) comprising
- a pouch cell (12) comprising:
a cell body (18),
a first tab (20) and a second tab (22) adapted to provide electrical connections to the cell body (18), and
- a cell tab cooling system (16) configured to transfer the heat from the tabs (20, 22); **characterized in that** the cell tab cooling system (16) is in facing contact with the first and/or the second tab (20, 22), and **in that** the cell tab cooling system (16) comprises a thermally conductive plate (24) made of high thermal conductivity material.

2. Battery apparatus (10) according to claim 1, wherein the thermally conductive plate (24) is made of graphite or copper.

3. Battery apparatus (10) according to claim 1 or 2, wherein an outer layer (26) made of electrically insulated material surrounds the thermally conductive plate (24).

4. Battery apparatus (10) according to claim 3, wherein a glue is arranged between the cell tabs (20, 22) and the thermally conductive plate (24).

5. Battery apparatus (10) according to claim 3 or 4, wherein the outer layer (26) has a thickness between 10 and 100 micrometres.

6. Battery apparatus (10) according to any of claims 1 to 5, wherein the thermally conductive plate (24) has a thickness between 10 micrometres and 1 mm.

7. Battery apparatus (10) according to according to any of claims 1 to 6, wherein the pouch cell (12) is a first pouch cell (12) and further comprising a second pouch cell (14) and a cooling fin (28) extending between the first and the second pouch cell (12, 14) and in facing contact with the first and the second pouch cell (12, 14).

8. Battery apparatus (10) according to claim 7, and wherein the cell tab cooling system (16) is integral with the cooling fin (28).

9. Battery apparatus (10) according to claim 7, wherein the cell tab cooling system (16) contacts the cooling fin (28).

10. Battery apparatus (10) according to claim 7 or claim 9, wherein the cooling fin (28) is a thermal fin with a first contact unit, a second contact unit and a supporting unit sandwiched between the first and the second contact unit, the supporting unit comprising a structure arranged to establish an insulating gap.

11. Battery apparatus (10) according to any of claims 1 to 10, wherein the first and/or the second tab (20, 22) extend along a tab length (Lt), and wherein the length of a first portion (241) of the conductive plate (24) extending along the first and/or the second tab (20, 22) is the same or is shorter than the length of the first and/or second tab.

12. Battery apparatus (10) according to any of claims 1 to 10, wherein the first and/or the second tab extend along a tab length, and wherein the length of a first portion (241) of the conductive plate (24) extending along the first and/or the second tab (20, 22) is longer than the length of the first and/or second tab (20, 22).

13. Battery apparatus (10) according to claim 12, wherein the cell tab cooling system (16) extends from the cell body (18) to a casing, and wherein the first and/or the second tab (20, 22) are at a non-zero distance from the casing.

14. Battery apparatus (10) according to claim 13, wherein the casing comprises a cooler (30) and the cell tab cooling system (16) is directly or indirectly connected to the cooler (30).
